# DEMANDE DE BREVET EUROPEEN

(11) **EP 2 088 304 A2**
(43) Date de publication de la demande: **12.08.2009**
(21) Numéro de dépôt: 09151489.3
(22) Date de dépôt: 28.01.2009
(51) Int. Cl.: F02D 41/02, F02D 11/10, F02D 41/10

(54) **Systeme de commande du couple moteur d'un vehicle**

(30) Priorité: 08.02.2008 FR 0850824
(71) Demandeur: Peugeot Citroën Automobiles Société Anonyme, 78140 Velizy Villacoublay (FR)
(72) Inventeur: Bailleux, François, 91400 Saclay (FR)

(57) **Abrégé**

Le système de contrôle/commande du couple moteur d'un véhicule, notamment d'un véhicule automobile, comprend un calculateur (13) agencé pour calculer en temps réel une consigne de couple maximal en tenant compte d'une énergie que le véhicule peut dissiper à chaque instant et des moyens (14) agencés pour limiter le couple moteur à ladite consigne maximale.

L'invention trouve son application dans le domaine de l'automobile.

## Description

La présente invention concerne un système de contrôle/commande du couple moteur d'un véhicule, notamment d'un véhicule automobile.

On connaît déjà des systèmes de contrôle/commande du couple moteur d'un véhicule automobile. Par exemple le document US4917063 divulgue une méthode pour établir un couple de moteur de véhicule selon laquelle on détermine des plages opérationnelles de vitesse de moteur à partir de caractéristiques de puissance de sortie du moteur, on favorise un fonctionnement dans la partie la plus basse de chaque plage opérationnelle et on établit le couple moteur relativement à la partie favorisée de plage opérationnelle.

Cependant les valeurs de couple régulées évoluent généralement dans une plage de valeurs pour laquelle un bridage du moteur impose une limite supérieure déterminée a priori pour répondre à l'ensemble des conditions de fonctionnement du véhicule dans le cadre de son dimensionnement. Cette approche contraignante ne permet pas de tirer parti de toutes les ressources du moteur.

Le but de la présente invention est de proposer un système permettant de s'affranchir d'un bridage du moteur par nature contraignant du fait de devoir répondre à des situations simplement potentiellement existantes mais non nécessairement existantes à chaque instant.

A cet effet, l'invention a pour objet un système de contrôle/commande du couple moteur d'un véhicule, notamment d'un véhicule automobile, comprenant :
- un calculateur agencé pour calculer en temps réel une consigne de couple maximal en tenant compte d'une énergie que le véhicule peut dissiper à chaque instant ;
- des moyens agencés pour limiter le couple moteur à ladite consigne maximale.

Selon une autre caractéristique de l'invention, le calculateur calcule la consigne de couple maximal en fonction d'un nombre d'accélérations dans un intervalle de temps déterminé.

Selon une autre caractéristique de l'invention, le calculateur calcule la consigne de couple maximal en fonction d'une mesure délivrée par un capteur d'assiette.

Selon une autre caractéristique de l'invention, le calculateur calcule la consigne de couple maximal en fonction d'une mesure délivrée par un capteur de pente.

Selon une autre caractéristique de l'invention, le calculateur calcule la consigne de couple maximal en fonction d'une mesure délivrée par un capteur de pression.

Selon une autre caractéristique de l'invention, le calculateur calcule la consigne de couple maximal en fonction d'une mesure délivrée par des capteurs du bouclage des ceintures de sécurité.

Selon une autre caractéristique de l'invention, le calculateur calcule la consigne de couple maximal en fonction d'une mesure délivrée par des capteurs de présence des sièges amovibles.

Selon une autre caractéristique de l'invention, le calculateur calcule la consigne de couple maximal en fonction d'une mesure délivrée par des capteurs du basculement des dossiers ou des sièges complets du véhicule.

Selon une autre caractéristique de l'invention, le calculateur calcule la consigne de couple maximal en fonction d'une mesure d'accélération verticale délivrée par un accéléromètre à l'arrière du véhicule.

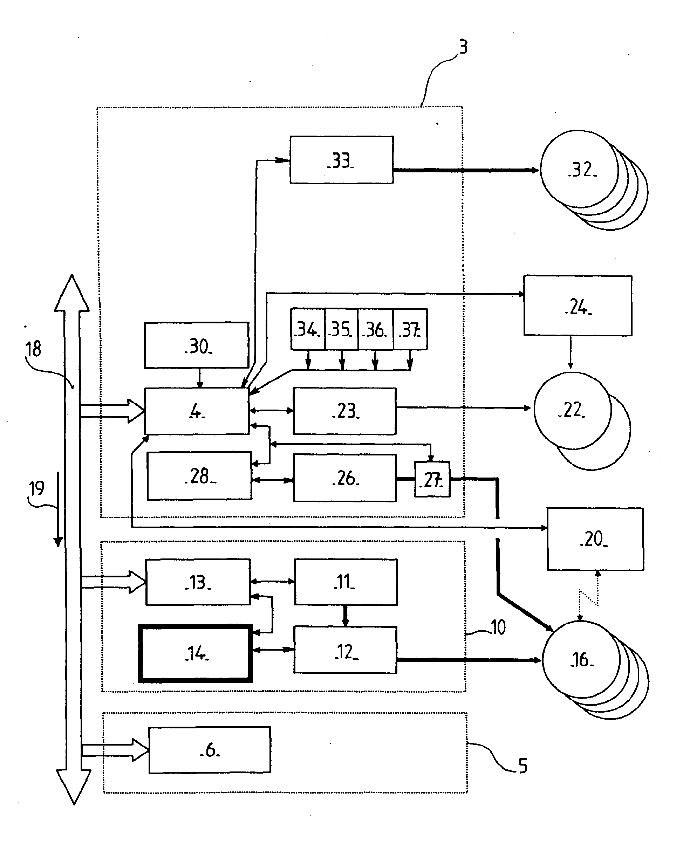

L'invention sera maintenant décrite en détail en référence à la figure unique annexée qui représente un schéma blocs représentant l'architecture du système de limitation de couple d'un véhicule selon l'invention.

Le système de limitation de couple, dont l'architecture est représentée sur la figure unique, est implanté dans un véhicule notamment automobile comprenant un habitacle 3, des roues 16, une planche de bord 5 à moyens d'affichages et de commandes 6 et un groupe motopropulseur 10 notamment constitué d'un moteur thermique 11, d'une boite de vitesses 12 et d'un calculateur 13 embarqué dans le véhicule.

Ce système agit de sorte que tout dépassement d'une consigne de couple maximal, soit impossible.

A cet effet, le système comprend des moyens 14 de limitation automatique du couple du véhicule, ces moyens étant connus en soi. Ces moyens 14 agissent lorsque le couple du véhicule tend à dépasser une consigne de couple maximal en modifiant le point de fonctionnement du moteur ou en activant des vannes disposées sur le circuit d'admission ou d'échappement du moteur.

Dans les systèmes connus, la consigne de couple maximal est soit constante et préréglée par construction dans le cas des systèmes dits « constructeurs », soit variable et réglée par d'autres systèmes tels que par exemple les systèmes de régulation de vitesse dans les systèmes dits « asservis ».

Selon l'invention, le couple maximal de consigne est variable et est déterminée par le calculateur 13 embarqué dans le véhicule à partir des signaux électriques d'un capteur 20 de l'assiette, notamment du train arrière du véhicule, ces signaux électriques étant représentatifs de la masse ou de la charge du véhicule. Les capteurs d'assiette sont déjà connus, par exemple pour la correction de portée des phares avec lampes à décharges.

Le système déterminant le couple maximal de consigne, comprend le calculateur 13 associé au groupe motopropulseur 10 du véhicule, représenté sur la figure par un bloc délimité par une ligne fermée en pointillées, c'est-à-dire le boîtier électronique déjà présent dans le véhicule, notamment pour assurer la gestion de l'allumage et parfois de l'injection.

L'assiette du train arrière correspond à la position d'équilibre de la suspension arrière du véhicule par rapport à un plan horizontal de référence tel que le sol.

Ainsi, en considérant que la charge utile est approximativement uniformément répartie ou principalement à l'arrière dans ou sur le véhicule, les signaux électriques du capteur de l'assiette du train arrière 20, peuvent être considérés comme représentatifs de la masse du véhicule et plus particulièrement de sa charge utile. En effet, plus le véhicule est chargé, plus l'assiette est basse, surtout à l'arrière.

Comme représenté sur la figure par un bloc délimité par une ligne fermée en pointillées, l'habitacle 3 est muni d'un calculateur 4 recevant directement les signaux électriques du capteur 20 de l'assiette du train arrière du véhicule. A partir de ces signaux, le calculateur 4 établit une évaluation de la masse du véhicule dont la donnée représentative 19 est transmise au calculateur 13 associé au groupe motopropulseur 10 par un bus 18 de transmission de données tel qu'un bus CAN.

A partir de cette donnée 19 d'évaluation de la masse, le calculateur 13 associé au groupe motopropulseur 10, détermine un couple maximal de consigne appliqué aux moyens 14 de limitation automatique du couple du véhicule.

Pour mieux comprendre les explications qui suivent, revenons rapidement sur l'état antérieur de la technique dans lequel une limitation de couple moteur, est généralement fixée pour tenir compte de tous les cas de figures, en particulier pour être compatible avec le dimensionnement des freins. Les freins sont dimensionnés de façon à pouvoir absorber et dissiper l'énergie thermique qui correspond à l'énergie cinétique accumulée suite aux accélérations du véhicule. Or nous savons d'une part que l'énergie cinétique est proportionnelle à la masse et au carré de la vitesse, et d'autre part que l'accroissement d'énergie cinétique, est proportionnel au couple moteur. On fixe alors une limitation de couple, compatible avec la masse maximale que peut avoir le véhicule en charge.

La limitation de couple, rendue variable par variation de la consigne de couple maximal, permet de dimensionner le moteur pour atteindre des couples qui dépassent la limitation fixée a priori pour répondre aux conditions les plus défavorables. Grâce à la limitation variable de couple, il est possible de mettre une limitation plus haute lorsque la masse est faible et obtenir ainsi un véhicule plus nerveux à vide. Il suffit alors de baisser la valeur de la limitation de couple, en d'autres termes la consigne de couple maximal, lorsque la masse est plus importante. Si on autorise des couples allant bien au-delà des limites habituelles, pour des masses faibles, il est utile de prévoir une sécurité en cas de panne du capteur d'assiette, par exemple en limitant le couple aussi sévèrement que dans l'état antérieur de la technique, c'est-à-dire en considérant que le véhicule est dans les conditions les plus défavorables. On peut aussi prévoir une redondance de l'information sur la valeur de la masse, par exemple au moyen du système de détection de présence du bouclage de ceinture qui laisse présager d'une valeur minimale de masse supplémentaire en cas d'absence de passager sur un siège. Les capteurs intégrés dans les pneumatiques, sont capables aussi de délivrer la pression, la température et la masse du véhicule. On peut aussi prévoir d'autoriser un couple plus élevé sur une chaussée horizontale ou en montée.

Afin d'améliorer la sécurité routière, la consigne de couple maximal ainsi déterminée est d'autant plus faible que la donnée 19 d'évaluation de la masse du véhicule est élevée. Ainsi, le calculateur 13, associé au groupe motopropulseur 10, détermine la consigne de couple en considérant la consigne de couple comme une fonction décroissante ayant pour variable la donnée 19 d'évaluation de la masse du véhicule. Cette fonction peut être une fonction continue ou une fonction discontinue à paliers correspondant à des seuils de masse de véhicule prédéterminés.

Pour des raisons de sécurité, si le calculateur 13 associé au groupe motopropulseur 10 ne reçoit pas de données 19 d'évaluation de la masse du véhicule, la consigne de couple considérée est une consigne de couple, la plus basse correspondant à un poids de chargement important.

Il est à noter que certains véhicules, et plus particulièrement les véhicules à forte motorisation, comprennent déjà un capteur 20 de l'assiette du train arrière utilisé pour la correction des phares à lampes à décharge 22.

En effet, ces phares 22, émettant environ deux fois plus de puissance que les phares traditionnels, nécessitent un réglage automatique pour éviter l'éblouissement des autres conducteurs de véhicule.

Pour ce faire, le calculateur 4, associé à l'habitacle 3, détermine la hauteur appropriée à partir des signaux électriques du capteur 20 de l'assiette du train arrière du véhicule, compare la hauteur déterminée à la position courante des phares 22 détectée par des capteurs de la position des phares 22 et commande en conséquence, des moyens 24 de correction de la position des phares agissant sur la position et/ou sur l'orientation des phares 22, de façon conjuguée avec un étage de puissance 23.

Ainsi, pour ces véhicules, le système de l'invention ne nécessite pas de capteur supplémentaire dédié à sa fonction de limitation de la vitesse du véhicule.

Le calculateur 4 associé à l'habitacle 3 reçoit également les signaux électriques d'un capteur 27 de l'état de la suspension arrière 26. Dans le cas de suspensions pneumatiques ou hydropneumatique, le capteur de l'état de la suspension arrière est un capteur de pression 27 dont la pompe est représentée sur le schéma par la référence 28. Ces signaux électriques peuvent également être considérés comme représentatifs de la masse du véhicule. Ainsi, le calculateur 4, associé à l'habitacle 3, peut les prendre en compte pour vérifier et ajuster en conséquence l'évaluation de la masse du véhicule établie également à partir des signaux électriques du capteur 20 d'assiette de train arrière.

Le calculateur 4 associé à l'habitacle 3 reçoit également les signaux électriques d'un capteur 30 de l'accélération verticale du train arrière du véhicule. Ce capteur étant souvent utilisé pour les suspensions active ou à amortissement variable ou pour les détecteurs de pressions de pneumatique. Ces résultats permettent d'analyser le mode de suspension arrière et d'en calculer une fréquence de résonance afin d'affiner l'évaluation de la masse du véhicule.

Le calculateur 4 associé à l'habitacle 3 reçoit également les signaux électriques de capteurs 33 intégrés dans les pneumatiques 32 du véhicule ou dans la suspension arrière et à partir desquels le calculateur 4 associé peut affiner l'évaluation de la masse du véhicule. Les capteurs 33 sont connus en soi et aptes à fournir des informations de pression ou de température.

La masse du véhicule qui est évaluée correspond à la somme de la masse du véhicule à vide qui est constante et de la charge qu'il s'agisse de passagers, de bagages ou de marchandises.

Ainsi, la masse du véhicule peut être vérifiée, et ajustée en conséquence, en fonction de la détection du nombre de passagers présents dans le véhicule.

Pour ce faire, le calculateur 4 associé à l'habitacle 3 reçoit également les signaux électriques de capteurs de présence des sièges amovibles 34 dans le véhicule ainsi que les signaux électriques de capteurs du bouclage des ceintures de sécurité 35 de personnes assises sur les sièges correspondants du véhicule ; ces signaux étant indicatifs du nombre de passagers dans le véhicule.

De plus, le calculateur 4 peut recevoir les signaux électriques d'un capteur 36 de pente de la chaussée que le véhicule gravite ou dévale.

Par ailleurs, le calculateur 4 peut recevoir les signaux électriques de capteurs 37 du basculement des dossiers ou des sièges complets du véhicule, le basculement étant détecté au moyen d'interrupteurs électriques. Ces signaux peuvent être considérés comme indicatifs du chargement d'objets encombrants en lieu et place des passagers du véhicule.

Dans le système de contrôle/commande du couple moteur conforme à l'invention, le calculateur 13 est agencé pour calculer en temps réel une consigne de couple maximal en tenant compte d'une énergie que le véhicule peut dissiper à chaque instant.

Lorsqu'il roule, un véhicule est amené à dissiper de l'énergie calorifique, essentiellement au niveau du moteur par le circuit de refroidissement et au niveau des freins lors des freinages. Les différents organes du véhicule, tels que le circuit de refroidissement et les freins, sont dimensionnés de façon à ce que le véhicule puisse dissiper une certaine quantité d'énergie. Au niveau des freins, on conçoit aisément que l'énergie à dissiper à un instant donné, dépend essentiellement de l'énergie cinétique du véhicule à cet instant, laquelle est proportionnelle à la masse et au carré de la vitesse du véhicule. Il convient que l'énergie à dissiper entre dans l'épure de l'énergie que peut dissiper le véhicule.

Or l'énergie que peut dissiper le véhicule, dépend bien entendu de son dimensionnement pour une vitesse donnée mais aussi des accélérations et freinages dans une période antérieure proche au cours de laquelle une quantité suffisante d'énergie calorifique n'a pas pu se dissiper.

Ainsi par exemple, on sait que des freins qui satisfont les critères AMS (acronyme de Auto Motive Sport en langue étrangère), permettent de freiner un véhicule de 100 km/h à 0km/h en moins de trois secondes. Pour vérifier la satisfaction des critères, les tests AMS consistent généralement à effectuer une succession de 10 freinages de 130 à 0 km/h avec une accélération maximale à la suite de chaque freinage pour remonter en vitesse. Une consigne de couple maximal, permet de réduire l'accélération et par conséquent d'espacer les freinages de sorte que les freins auront plus de temps pour refroidir.

Par exemple encore, on connaît certains styles de conduite sportive en descendant des routes de montagne, qui consistent à relancer le moteur en sortie de chaque virage avec freinage en entrée du virage suivant pour ne pas déraper.

Dans le système de contrôle/commande du couple moteur conforme à l'invention, les moyens 14 agencés pour limiter le couple moteur à la consigne maximale qui a été calculée par le calculateur, permettent de tenir compte d'une condition de roulement immédiate et non pas de conditions posées a priori qui sont nécessairement plus contraignantes à cause d'une marge de sécurité nécessaire à prendre.

La consigne de couple maximal est par exemple initialisée par défaut à la valeur extrémale que peut délivrer le moteur et dont le travail génère une énergie que le véhicule à froid peut dissiper.

Le calculateur calcule la consigne de couple maximal en fonction d'un nombre d'accélérations dans un intervalle de temps déterminé de façon à réduire la consigne en deçà de la valeur extrémale, par exemple si la masse du véhicule est importante, au bout du troisième coup d'accélérateurs dans l'intervalle de temps déterminé.

Lorsque le calculateur calcule la consigne de couple maximal en fonction d'une mesure délivrée par le capteur de pente 36, on tient compte de ce que l'accélération peut résulter d'autres facteurs que simplement celui correspondant à une augmentation de puissance fournie par le moteur, en particulier lorsque le véhicule est dans une pente descendante depuis plusieurs kilomètres en dévalant une montagne.

D'autres moyens d'estimer la masse du véhicule que ceux énoncés précédemment, sont possibles. A titre illustratif, on peut citer un calcul de la consigne de couple maximal en fonction d'une mesure d'accélération verticale délivrée par un accéléromètre à l'arrière du véhicule, non représenté. Toute accélération selon un axe Z perpendiculaire au plan des roues, est proportionnelle à la masse du véhicule.

Un tel système de limitation du couple du véhicule contribue à la sécurité routière sans imposer un couple figé de consigne basse qui briderait les performances du véhicule.

La variation d'énergie cinétique augmentant avec le couple appliqué sur les roues du véhicule et avec la masse de celui-ci, grâce à ce système, les variations maximales d'énergie cinétique appliquées au véhicule, sont alors contrôlées.

Par conséquent, le dimensionnement du système de freinage peut être réduit, notamment en réduisant le diamètre ou l'épaisseur des disques de frein, ceci ayant pour effet de limiter la masse du dispositif de freinage.

De plus, au niveau du système de refroidissement moteur, la surface du radiateur moteur peut également être réduite par la réduction de vitesse du véhicule pilotée par la masse de celui-ci.

Un tel système est d'autant plus avantageux que les véhicules tendent à avoir des masses de plus en plus importantes à cause des nouvelles normes de résistance aux chocs, de pollution et de l'augmentation du nombre d'équipements, et de la présence de moteurs de plus en plus puissants et, par conséquent, de plus en plus lourds.

## Revendications

1. Système de contrôle/commande du couple moteur d'un véhicule, notamment d'un véhicule automobile, s'affranchissant d'un bridage du moteur, comprenant :
- un calculateur (13) agencé pour calculer, en temps réel, une consigne de couple maximal en fonction d'une information représentative de la masse ou de la charge du véhicule et en tenant compte d'une énergie que le véhicule peut dissiper à chaque instant ;
- des moyens (14) agencés pour limiter le couple moteur à ladite consigne maximale.

2. Système de contrôle/commande selon la revendication 1, dans lequel l'information représentative de la masse ou de la charge du véhicule est une mesure délivrée par un capteur d'assiette (20).

3. Système de contrôle/commande selon la revendication 2, dans lequel le capteur d'assiette (20) est disposé sur le train arrière du véhicule.

4. Système de contrôle/commande selon l'une des revendications précédentes, dans lequel l'information représentative de la masse ou de la charge du véhicule est une mesure délivrée par un capteur de pression des pneus du véhicule (33).

5. Système de contrôle/commande selon l'une des revendications précédentes, dans lequel l'information représentative de la masse ou de la charge du véhicule est une mesure d'accélération verticale délivrée par un accéléromètre (30) à l'arrière du véhicule.

6. Système de contrôle/commande selon l'une des revendications précédentes, dans lequel l'information représentative de la masse ou de la charge du véhicule est l'état de la suspension arrière délivré par un capteur de l'état de suspension arrière (27).

7. Système de contrôle/commande selon la revendication précédente dans lequel le capteur de l'état de suspension arrière (27) est un capteur de pression associé à une pompe (28).

8. Système de contrôle/commande selon l'une des revendications précédentes, dans lequel une information du nombre de passagers présents dans le véhicule permet de compléter l'information représentative de la masse ou de la charge du véhicule.

9. Système de contrôle/commande selon la revendication précédente dans lequel, l'information du nombre de passagers présents dans le véhicule est une mesure délivrée par des capteurs du bouclage des ceintures de sécurité (35).

10. Système de contrôle/commande selon l'une des revendications 8 et 9, dans lequel l'information du nombre de passagers présents dans le véhicule est une mesure délivrée par des capteurs de présence de sièges amovibles (34) dans le véhicule.

11. Système de contrôle/commande selon l'une des revendications précédentes, dans lequel, une information du chargement d'objets encombrants en lieu et place des passagers du véhicule permet de compléter l'information représentative de la masse ou de la charge du véhicule.

12. Système de contrôle/commande selon la revendication précédente, dans lequel l'information du chargement d'objets encombrants en lieu et place des passagers du véhicule, est une mesure délivrée par des capteurs du basculement des dossiers ou des sièges complets du véhicule (37).

13. Système de contrôle/commande selon l'une des revendications précédentes, dans lequel une mesure délivrée par un capteur de pente (36) de la chaussée sur laquelle évolue le véhicule, permet de compléter l'information représentative de la masse ou de la charge du véhicule.

14. Système de contrôle/commande selon l'une des revendications précédente, dans lequel le calculateur (13) calcule la consigne de couple maximal en fonction d'un nombre d'accélérations dans un intervalle de temps déterminé.

15. Système de contrôle/commande du couple moteur d'un véhicule, notamment d'un véhicule automobile, s'affranchissant d'un bridage du moteur, comprenant :
- un calculateur (13) agencé pour calculer, en temps réel, une consigne de couple maximal en fonction d'une information représentative de la pente de la chaussée sur laquelle évolue le véhicule et en tenant compte d'une énergie que le véhicule peut dissiper à chaque instant ;
- des moyens (14) agencés pour limiter le couple moteur à ladite consigne maximale.

16. Système de contrôle/commande du couple moteur d'un véhicule, notamment d'un véhicule automobile, s'affranchissant d'un bridage du moteur, comprenant :
- un calculateur (13) agencé pour calculer, en temps réel, une consigne de couple maximal en fonction d'un nombre d'accélérations dans un intervalle de temps déterminé et en tenant compte d'une énergie que le véhicule peut dissiper à chaque instant ;
- des moyens (14) agencés pour limiter le couple moteur à ladite consigne maximale.
